# FASCICULE DE BREVET EUROPEEN

(11) **EP 1 395 818 B1**
(45) Date de publication et mention de la délivrance du brevet: **08.03.2006**
(21) Numéro de dépôt: 02747516.9
(22) Date de dépôt: 07.06.2002
(51) Int. Cl.: G01N 29/14, A01M 31/00, G01V 1/00

(54) **PROCEDE ET APPAREIL DE DETECTION, IDENTIFICATION ET QUANTIFICATION DENSIMETRIQUE D'INSECTES GRANIVORES DANS DES STOCKS DE CEREALES**
VERFAHREN UND VORRICHTUNG ZUR ERFASSUNG, IDENTIFIZIERUNG UND DENSIMETRISCHEN QUANTIFIZIERUNG VON KÖRNERFRESSENDEN INSEKTEN IN GETREIDEBESTÄNDEN
METHOD AND DEVICE FOR DETECTION, IDENTIFICATION AND DENSIMETRIC QUANTIFICATION OF GRAIN-EATING INSECTS IN STOCKS OF CEREALS

(30) Priorité: 08.06.2001 FR 0107511
(43) Date de publication de la demande: 10.03.2004
(73) Titulaire: Solween Technologies (Société à responsabilité limitée), 83320 Carqueiranne (FR)
(72) Inventeur: RODRIGUEZ GOBERNADO, Pedro, E-47008 Valladolid (ES); FLEURAT-LESSARD, Francis, F-33170 Gradignan (FR); VILLAMAYOR, José, E-22002 Huesca (ES); SAUTEREAU, Bernard, F-36100 Issoudun (FR); BRIONI, Giuseppe, I-25014 Castenedolo (IT); GONDOLO, Jean, F-83320 Carqueiranne (FR); TOMASINI, Bernard, F-83400 Hyeres (FR)
(74) Mandataire: Rhein, Alain
(86) Numéro de dépôt international: PCT/FR2002/001958
(87) Numéro de publication internationale: WO 2002/101378

(56) Documents cités:
- US-A- 4 445 788
- US-A- 4 809 554
- US-A- 4 895 025
- US-A- 4 937 555
- US-A- 4 941 356
- US-A- 5 005 416
- US-A- 5 285 688
- US-A- 5 473 942

## Description

La présente invention a pour objet un procédé et son dispositif de mise en oeuvre, pour la détection, la classification et la quantification densimétrique d'insectes, d'une ou de plusieurs familles présentes simultanément, dans des stocks de produits alimentaires susceptibles d'être infestés, tels que des stocks céréaliers.

Dans le domaine de l'agriculture et de l'agroalimentaire, les insectes causent de nombreux dommages, que ce soit au niveau des cultures ou au niveau du stockage des denrées.

De manière générale, pour éliminer les insectes on procède à un traitement insecticide systématique.

S'il est relativement aisé de déterminer la nature et la densité d'insectes par un simple contrôle visuel de la partie hors-sol des cultures, il n'en est pas de même pour les denrées, notamment les céréales, lorsqu'elles sont stockées ou transportées, que ce soit dans un entrepôt, un silo ou un camion, puisqu'il est très difficile de détecter le degré d'infestation à l'intérieur du lot.

Actuellement, on procède à l'analyse par tamisage d'un ou de plusieurs échantillons. Toutefois, l'infestation peut ou non être uniforme, et être développée plus ou moins profondément. Aussi, afin d'obtenir des résultats moins aléatoires, on réalise les prélèvements d'échantillon dans les zones susceptibles d'abriter des insectes, par exemple dans les zones où a été observée une hausse de température, ce qui peut traduire la présence d'insectes.

Si on découvre ne serait-ce qu'un insecte dans un échantillon on procède au traitement de tout le lot, et si on ne découvre pas d'insecte dans les échantillons il est fréquent que dans le doute on traite également tout le lot. On observe donc des applications systématiques d'insecticides, aboutissant à un surtraitement.

L'inconvénient de cette manière de procéder est que les traitements utilisés sont réalisés à base de produits chimiques, souvent toxiques.

On distingue deux types de traitement, le traitement de choc et le traitement rémanent. Le traitement de choc est à base de dichlorvos, classé toxique, qui tue tous les insectes en 2 ou 3 heures, et qui, du fait de sa grande volatilité, disparaît presque totalement après 48 heures. Le traitement rémanent emploie des molécules de dégradation lente qui permettent une action rémanente de l'insecticide, leur efficacité est plus étalée dans le temps, il faut 72 heures pour tuer tous les insectes, et la destruction des insectes réintroduits est assurée pendant au moins 3 à 4 mois.

L'emploi des insecticides est actuellement une préoccupation très forte des céréaliers, en particulier des transformateurs, lesquels vont donc, à court terme, proscrire les insecticides tout en demandant des céréales débarrassées des insectes.

Il existe des méthodes alternatives permettant de lutter contre l'infestation des insectes, essentiellement basées sur le refroidissement des stocks par ventilation. Ces méthodes peuvent permettre de limiter les surtraitements, par contre elles nécessitent un suivi rigoureux des stocks et des procédés fiables de détection d'insectes.

Il a déjà été proposé des dispositifs permettant de détecter la présence d'insectes, et éventuellement leur classification ainsi que leur quantification. Ces dispositifs sont pour la plupart peu utilisés car mettant en oeuvre des moyens de détection, des moyens de collecte et des moyens d'analyse d'utilisation complexe.

On connaît ainsi par le document US 5.646.404 un appareil et un procédé pour la détection quantitative d'insectes granivores, ledit appareil comprenant des moyens infrarouges aptes à détecter les insectes contenus dans une quantité de grains passant dans un canal. Ce dispositif consiste en réalité en un tamis amélioré, le résultat dépendant là aussi du lieu de prélèvement de l'échantillon.

On connaît également des procédés de détection utilisant des moyens aptes à détecter les insectes en écoutant les bruits que font ceux-ci, que ce soit des bruits de déplacement, de mastication ou autres. Ces procédés sont toutefois confrontés à certains problèmes, notamment celui des bruits parasites susceptibles de fausser le résultat, et d'autre part celui de permettre difficilement une classification et une quantification densimétrique des insectes.

Le document US 4.991.439 décrit un appareil de ce type, utilisant un cristal piézo-électrique pour détecter les vibrations produites par les insectes granivores, permettant ainsi, en analysant les vibrations et en les comparant des vibrations connues, de déterminer l'espèce concernée. Cet appareil est proposé dans deux modes de réalisation, l'un utilisable directement dans le stock et l'autre par l'analyse d'un échantillon. Les appareils ne sont pas très fiables du point de vue du résultat du fait des bruits parasites. C'est d'ailleurs pour cette raison que celui fonctionnant par échantillonnage est préféré, car il permet de déplacer l'échantillon dans un endroit calme pour en réaliser l'analyse à l'abri des bruits parasites.

L'inventeur de ces appareils avait déjà tenté de résoudre le problème posé par la présence d'insectes dans un stock de céréales, et il avait mis au point un appareil pour la détection et la classification d' insectes, lequel est décrit dans le document US 4 895 025. Avec cet appareil, on réalise des enregistrements des signaux acoustiques émis par les insectes, on réalise une moyenne desdits signaux, et on compare l'amplitude moyenne en fonction de la fréquence avec des données connues qui correspondent à un type d'insectes.

Cette méthode permet effectivement de classifier les insectes, mais, outre le fait que la réalisation d'une moyenne des signaux fréquentiels ne peut pas être appliquée dans le cas d'une utilisation réelle dans un environnement opérationnel, cette méthode présente l'inconvénient de ne pas permettre de différencier les insectes quand le milieu testé en renferme plusieurs familles. Dans ce cas, puisqu'il n'est pas possible de classifier de manière précise les différentes familles d'insectes présentent dans un stock, il est difficile d'envisager une quantification densimétrique.

La présente invention a pour but de proposer un procédé pour la détection, la classification et la quantification densimétrique d'insectes granivores, d'une ou de plusieurs familles d'insectes présentes simultanément, dans des stocks céréaliers ou autres permettant de remédier aux divers inconvénients précités, en étant d'une utilisation simple, de fabrication relativement simple et peu coûteuse au regard des dispositifs existants.

La présente invention a également pour but de proposer un dispositif de mise en oeuvre du procédé selon l'invention, et qui est conçu pour remplir trois fonctions :
- la détection de la présence éventuelle d'insectes dans le volume de grains testé,
- la classification de l'espèce et du stade, larves ou adultes, des insectes détectés,
- l'estimation de la densité de la population des insectes détectés, c'est-à-dire l'importance de l'infestation.

On notera que le procédé selon l'invention n'est pas limité à une utilisation dans des produits céréaliers, il est ainsi possible de l'utiliser dans d'autres produits, tels que des oléagineux par exemple.

Le procédé pour la détection, la classification et la quantification densimétrique d'insectes granivores, d'une ou de plusieurs familles d'insectes présentes simultanément, dans des stocks céréaliers ou autres selon l'invention, est du type consistant à détecter lesdits insectes par l'intermédiaire des bruits et vibrations sonores et/ou infrasonores qu'ils émettent, et il se caractérise essentiellement en ce qu'il consiste à réaliser les opérations suivantes :
- enregistrer les bruits réels dans ledit stock,
- éliminer les bruits parasites connus,
- détecter sur la courbe enveloppe d'énergie obtenue d'éventuelles fenêtres correspondant à des pics d'énergie et en déterminer la fréquence moyenne, la largeur spectrale et l'énergie globale,
- comparer la fréquence moyenne et la largeur de chacune desdites fenêtres à celles de fenêtres de caractéristiques similaires connues et répertoriées, en vue d'une classification taxinomique,
- enfin, comparer la fréquence moyenne et l'énergie globale de chacune desdites fenêtres, à celles de fenêtres de caractéristiques similaires connues et répertoriées, en vue d'une quantification densimétrique.

Le procédé selon l'invention permet de détecter la présence d'insectes, mais également de classifier ceux-ci et de les quantifier, en enregistrant directement et sans échantillonnage les bruits et vibrations réels dans le stock.

Selon une caractéristique additionnelle du procédé selon l'invention, on réalise également les opérations suivantes :
- analyser la courbe des fréquences et détecter des fenêtres de fréquence correspondant à des pics de fréquence, et en déterminer la fréquence moyenne et la largeur spectrale,
- mettre en regard les courbes d'énergie et de fréquence, et éliminer les fenêtres correspondant à des pics d'énergie ou de fréquence non appariées,
- comparer les fenêtres correspondant à des pics de fréquence des paires restantes avec des valeurs analogues connues et répertoriées, afin de déterminer la taxinomie et le stade de développement.

Cette caractéristique additionnelle permet de fiabiliser le résultat obtenu, elle permet de plus une classification plus pointue des espèces et notamment du stade de développement, larve ou adulte par exemple.

Selon une autre caractéristique additionnelle du procédé selon l'invention, on réalise des mesures de température et/ou d'hygrométrie, que l'on intègre au traitement du signal en sorte de pondérer le résultat obtenu.

Le fait de tenir compte de la température et/ou du degré d'humidité du grain permet d'affiner le résultat en ce qui concerne la classification taxinomique, puisque les conditions les plus favorables à une infestation par une espèce donnée sont connues, et donc aptes à être répertoriées au même titre que les valeurs de fréquence moyenne, de largeur spectrale et d'énergie globale des fenêtres correspondant aux pics d'énergie, et que les valeurs de fréquence moyenne et de largeur spectrale des fenêtres correspondant aux pics de fréquence.

Le dispositif permettant de mettre en oeuvre le procédé selon l'invention, est du type comprenant des moyens permettant de capter les bruits sonores et/ou infrasonores émis par des insectes dans un stock céréalier, et se caractérise essentiellement en ce qu'il comprend d'une part, au moins un moyen support rectiligne apte à être enfoncé dans le stock céréalier, ou autres, selon une certaine profondeur, ledit moyen support portant un ou plusieurs desdits moyens capteurs ; d'autre part des moyens de traitement des signaux captés ; et d'autre part encore des moyens d'affichage des résultats.

Selon une caractéristique additionnelle du dispositif selon l'invention, il comporte plusieurs moyens capteurs répartis le long du moyen support.

Selon un mode de réalisation particulier du dispositif selon l'invention, le moyen support consiste en un élément tubulaire dont l'extrémité libre se présente sous la forme d'une pointe.

Selon une autre caractéristique additionnelle du dispositif selon l'invention, le moyen support est muni de moyens de préhension autorisant sa manipulation et son transport par un opérateur.

Selon une autre caractéristique additionnelle du dispositif selon l'invention, il comporte plusieurs moyens support équipés chacun d'un ou de plusieurs moyens capteurs, et de moyens de traitement des signaux captés, lesdits moyens de traitement étant reliés à une centrale de gestion apte à analyser les résultats enregistrés par lesdits moyens de traitement et à afficher lesdits résultats.

Selon cette variante, il est possible d'utiliser plusieurs moyens support plantés en différents points du tas de céréales, en sorte de réaliser simultanément plusieurs mesures susceptibles d'accélérer les cadences, les différents emplacements d'implantation desdits moyens support par rapport à la configuration du tas, étant susceptibles d'être prédéterminés et même intégrés à l'opération du traitement du signal.

Les différents moyens supports peuvent être implantés séparément par un opérateur, ils peuvent aussi être reliés physiquement, et être manoeuvrés par un robot manipulateur, apte à réaliser automatiquement ou à la demande des mesures, que ce soit dans un silo ou dans la remorque d'un véhicule de transport.

Selon une autre caractéristique additionnelle du dispositif selon l'invention, le moyen de traitement des signaux captés comporte des moyens aptes à assurer l'acquisition de l'information en provenance des capteurs, des moyens aptes à exécuter le traitement de l'information acquise ou en cours d'acquisition, des moyens de gestion de l'interface avec l'utilisateur, une banque de données de profils d'insectes reconfigurable dynamiquement, des moyens de stockage des résultats des traitements effectués lors d'une campagne de mesures, des moyens de transmission aptes à assurer le déchargement des informations vers un calculateur externe via tous moyens de communication informatique.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- la figure 1 représente une vue schématique en élévation d'un dispositif selon l'invention.
- la figure 2 représente une vue schématique d'une variante du même dispositif lors de son utilisation.
- la figure 3 représente une vue schématique d'une autre variante du même dispositif lors de son utilisation.

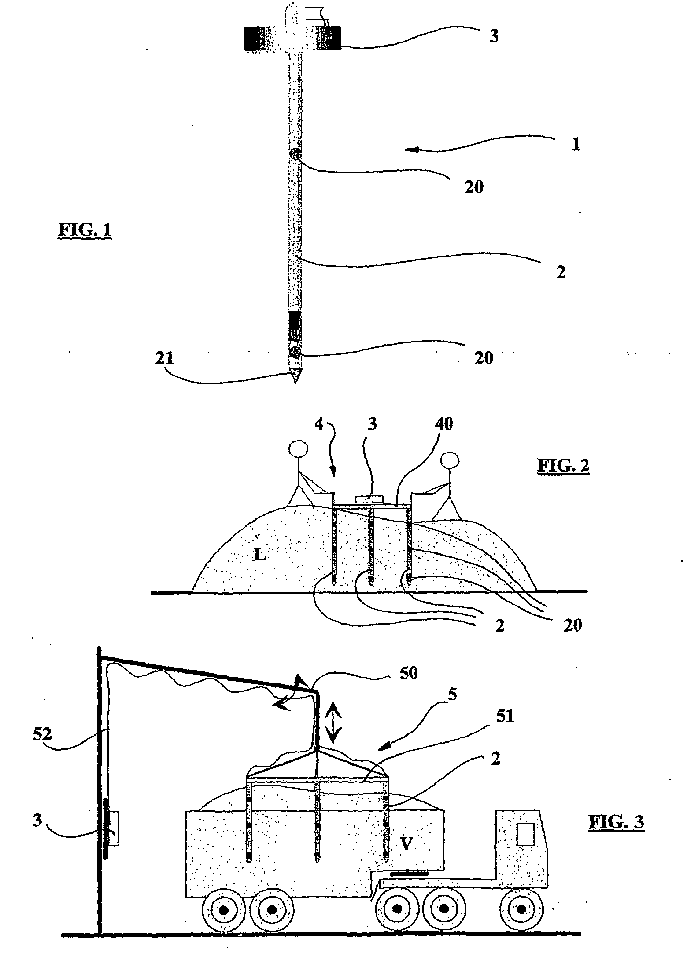

En référence à la figure 1 on peut voir qu'un dispositif 1 pour la détection, la classification et la quantification densimétrique d'insectes ou de familles d'insectes dans des stocks de produits alimentaires susceptibles d'être infestés, notamment des stocks céréaliers, selon l'invention comprend essentiellement deux parties à savoir une canne 2 destinée à être enfoncée dans le stock de produit à contrôler, et une tête 3.

La canne 2 comporte plusieurs modules 20 de capture répartis longitudinalement, en l'occurrence deux, l'un à faible distance de l'extrémité libre, et l'autre dans la région médiane.

La canne 2 comporte également une extrémité conique 21 facilitant l'enfoncement dans la matière, et renfermant capteur de température ambiant à faible inertie thermique, et éventuellement un capteur d'humidité.

On notera que la canne 2 peut comporter des moyens mécaniques , éventuellement motorisés, destinés à faciliter la pénétration dans la matière. Ces moyens peuvent être par exemple des éléments de forme hélicoïdale de type vrille.

La tête 3 renferme un système électronique permettant d'assurer l'acquisition de l'information en provenance des modules de capture 20, il exécute le traitement de l'information acquise ou en cours d'acquisition.

Le système électronique gère l'interface avec l'utilisateur en mode opérationnel de l'appareil, il intègre une mémoire de profils d'insectes, reconfigurable dynamiquement, il est apte à stocker les résultats des traitements effectués lors d'une campagne de mesures.

Il peut également assurer le déchargement des informations vers un calculateur externe via tous moyens de communication informatique.

Dans ce mode de réalisation, il incorpore un bloc d'alimentation électrique autonome et rechargeable, facilitant son déplacement et donc si utilisation, pour réaliser des enregistrements successifs en différents emplacements.

En référence maintenant à la figure 2, on peut voir une variante 4 du dispositif selon l'invention, qui comprend plusieurs cannes 2 reliées par un châssis 40 les maintenant à une certaine distance les unes des autres, et qui porte une tête 3.

Cette variante 4 permet de réaliser une prise de mesures multiples dans un même temps, ceci afin de diminuer le temps global d'analyse d'un lot ou pour faire une mesure tridimensionnelle en volume.

Les informations peuvent de manière avantageuse être transmises à une centrale qui les gère et peut les stocker et les imprimer, la transmission étant réalisée de préférence par liaison radio ou analogue.

Sur la figure 2 le dispositif selon l'invention est manipulé par deux opérateurs, qui le déplacent et enfoncent les cannes 2 dans un lot L de céréales, il est toutefois bien entendu possible de mécaniser le déplacement du dispositif, au moyen d'un robot par exemple.

Ainsi, en référence à la figure 3, on peut voir un dispositif selon l'invention 5 selon une variante, comprenant un bras mécanique 50 destiné à réaliser un contrôle automatique dans un lot de céréales, en l'occurrence dans un lot L contenu dans la remorque d'un véhicule de transport V.

Le dispositif 5 comprend des cannes 2 reliées par un châssis 51, lequel est suspendu au bras mécanique 50 qui permet de déplacer les cannes 2. Dans ce mode de réalisation, les informations recueillies par les cannes 2 sont transmises par des liaisons filaires 52 à une tête 3 disposée en amont du bras mécanique 50.

On notera qu'une installation analogue montée à demeure dans un silo, peut être utilisée en tant que système de surveillance permanent.

## Revendications

1. Procédé pour la détection, la classification et la quantification densimétrique d'insectes granivores, d'une ou de plusieurs familles d'insectes présentes simultanément, dans des stocks céréaliers ou autres, du type consistant à détecter lesdits insectes par l'intermédiaire des bruits et vibrations sonores et/ou infrasonores qu'ils émettent, **caractérisé en ce qu'**il consiste à réaliser les opérations suivantes :
- enregistrer les bruits réels dans ledit stock,
- éliminer les bruits parasites connus,
- détecter sur la courbe enveloppe d'énergie obtenue d'éventuelles fenêtres correspondant à des pics d'énergie et en déterminer la fréquence moyenne, la largeur spectrale et l'énergie globale,
- comparer la fréquence moyenne et la largeur de chacune desdites fenêtres à celles de fenêtres de caractéristiques similaires connues et répertoriées, en vue d'une classification taxinomique,
- enfin, comparer la fréquence moyenne et l'énergie globale de chacune desdites fenêtres, à celles de fenêtres de caractéristiques similaires connues et répertoriées, en vue d'une quantification densimétrique.

2. Procédé selon la revendication 1, **caractérisé en ce qu'**on réalise les opérations suivantes :
- analyser la courbe des fréquences et détecter des fenêtres de fréquence correspondant à des pics de fréquence, et en déterminer la fréquence moyenne et la largeur spectrale,
- mettre en regard les courbes d'énergie et de fréquence, et éliminer les fenêtres correspondant à des pics d'énergie ou de fréquence non appariées,
- comparer les fenêtres correspondant à des pics de fréquence des paires restantes avec des valeurs analogues connues et répertoriées, afin de déterminer la taxinomie et le stade de développement.

3. Procédé selon la revendication 1 ou la revendication 2, **caractérisé en ce qu'**on réalise des mesures de température et/ou d'hygrométrie, que l'on intègre au traitement du signal en sorte de pondérer le résultat obtenu.

4. Dispositif permettant la mise en oeuvre du procédé selon l'une quelconque des revendications précédentes, du type comprenant des moyens (20) permettant de capter les bruits sonores et/ou infrasonores émis par des insectes dans un stock céréalier ou autres,
**caractérisé en ce qu'**il comprend
d'une part, au moins un moyen support rectiligne (2) apte à être enfoncé dans le stock (L) céréalier, ou autres, selon une certaine profondeur, ledit moyen support (2) portant un ou plusieurs desdits moyens capteurs (20);
d'autre part des moyens pour
- enregistrer les bruits réels dans ledit stock,
- éliminer les bruits parasites connus,
- détecter sur la courbe enveloppe d'énergie obtenue d'éventuelles fenêtres correspondant à des pics d'énergie et en déterminer la fréquence moyenne, la largeur spectrale et l'énergie globale,
- comparer la fréquence moyenne et la largeur de chacune des dites fenêtres à celles de fenêtres de caractéristiques similaires connues et répertoriées, en vue d'une classification taxinomique,
- enfin, comparer la fréquence moyenne et l'énergie globale de chacune des dites fenêtres, à celles de fenêtres de caractéristiques similaires connues et répertoriées, en vue d'une quantification densimétrique; et
d'autre part encore des moyens d'affichage des résultats. tubulaire dont l'extrémité libre se présente sous la forme d'une pointe (21).

5. Dispositif selon la revendication 4, **caractérisé en ce qu'**il comporte plusieurs moyens capteurs (20) répartis le long du moyen support (2).

6. Dispositif selon la revendication 4 ou la revendication 5, **caractérisé en ce que** le moyen support (2) consiste en un élément

7. Dispositif selon l'une quelconque des revendications 4 à 6, **caractérisé en ce que** le moyen support (2) est muni de moyens de préhension autorisant sa manipulation et son transport par un opérateur.

8. Dispositif selon l'une quelconque des revendications 4 à 6, **caractérisé en ce qu'**il comporte plusieurs moyens support (2) équipés chacun d'un ou de plusieurs moyens capteurs (20), et de moyens de traitement des signaux captés, lesdits moyens de traitement étant reliés à une centrale de gestion apte à analyser les résultats enregistrés par lesdits moyens de traitement et à afficher lesdits résultats.

9. Dispositif selon l'une quelconque des revendications 4 à 6, **caractérisé en ce que** les différents moyens supports (2) sont reliés physiquement, et sont susceptibles d'être manoeuvrés par un robot manipulateur (50).

10. Dispositif selon l'une quelconque des revendications 4 à 9 précédentes, **caractérisé en ce que** le moyen de traitement des signaux captés comporte des moyens aptes à assurer l'acquisition de l'information en provenance des capteurs, des moyens aptes à exécuter le traitement de l'information acquise ou en cours d'acquisition, des moyens de gestion de l'interface avec l'utilisateur, une banque de données de profils d'insectes reconfigurable dynamiquement, des moyens de stockage des résultats des traitements effectués lors d'une campagne de mesures, des moyens de transmission aptes à assurer le déchargement des informations vers un calculateur externe via tous moyens de communication informatique.

## Patentansprüche

1. Verfahren zur Erfassung, Klassifizierung und densimetrische Quantifizierung von körnerfressenden Insekten von einer oder mehreren in Getreidebeständen oder dergleichen gleichzeitig anwesenden Insektenfamilien der Art bestehend darin, die besagten Insekten über die Schall- und/oder Infraschallgeräusche und -schwingungen, die sie aussenden, zu erfassen, **dadurch gekennzeichnet, daß** es darin besteht, die folgenden Arbeitsgänge auszuführen :
- die wirklichen Geräusche in dem besagten Bestand aufzunehmen,
- die bekannten Störgeräusche zu eliminieren,
- auf der erhaltenen Energieumhüllungskurve eventuelle, Energiespitzen entsprechenden Fenstern zu erfassen, und daraus die Mittelfrequenz, die spektrale Breite und die Gesamtenergie zu bestimmen,
- die Mittelfrequenz und die Breite von jedem der besagten Fenster mit jenen von Fenstern mit ähnlichen bekannten und klassifizierten Charakteristiken angesichts einer taxonomischen Klassifizierung zu vergleichen,
- schließlich, die Mittelfrequenz und die Gesamtenergie von jedem der besagten Fenster mit jenen von Fenstern mit ähnlichen bekannten und klassifizierten Charakteristiken angesichts einer densimetrischen Quantifizierung zu vergleichen.

2. Verfahren nach Anspruch 1, **dadurch gekennzeichnet, daß** die folgenden Arbeitsgänge ausgeführt werden:
- die Kurve der Frequenzen zu analysieren und Frequenzspitzen entsprechende Frequenzfenster zu erfassen, und daraus die Mittelfrequenz und die spektrale Breite zu bestimmen,
- die Energie- und Frequenzkurven gegenüberzustellen und die Fenster, die nicht gepaarten Energie- oder Frequenzspitzen entsprechen, zu eliminieren,
- die Fenster, die Frequenzspitzen der übriggebliebenen Paare entsprechen, mit analogen bekannten und klassifizierten Werten zu vergleichen, um die Taxonomie und den Entwicklungszustand zu bestimmen.

3. Verfahren nach Anspruch 1 oder Anspruch 2, **dadurch gekennzeichnet, daß** Temperatur- und/oder Luftfeuchtigkeitsmessungen durchgeführt werden, die in die Signalverarbeitung integriert werden, derart, um das erzielte Ergebnis zu wichtigen.

4. Vorrichtung, erlaubend die Anwendung des Verfahrens nach irgendeinem der vorgehenden Ansprüche, der Art umfassend Mittel (20), die es erlauben, die Schall- und/oder Infraschallgeräusche, die durch Insekten in einem Getreidebestand oder dergleichen ausgesendet werden, zu erfassen, **dadurch gekennzeichnet, daß** sie folgendes umfaßt :
einerseits, wenigstens ein geradliniges Trägermittel (2), geeignet, um in den Getreidebestand (L) oder dergleichen nach einer gewissen Tiefe hineingesteckt zu werden, wobei das besagte Trägermittel (2) eines oder mehrere der besagten Erfassungsmittel (20) trägt,
andererseits, Mittel, um
- das wirkliche Geräusch in dem besagten Bestand aufzunehmen,
- die bekannten Störgeräusche zu eliminieren,
- auf der erhaltenen Energieumhüllungskurve eventuelle Energiespitzen entsprechende Fenster zu erfassen, und daraus die Mittelfrequenz, die spektrale Breite und die Gesamtenergie zu bestimmen,
- die Mittelfrequenz und die Breite von jedem der besagten Fenster mit jenen von Fenstern mit ähnlichen bekannten und klassifizierten Charakteristiken angesichts einer taxonomischen Klassifizierung zu vergleichen,
- schließlich, die Mittelfrequenz und die Gesamtenergie von jedem der besagten Fenster mit jenen von Fenstern mit ähnlichen bekannten und klassifizierten Charakteristiken angesichts einer densimetrischen Quantifizierung zu vergleichen, und,
andererseits noch, Mittel zum Anzeigen der Ergebnisse.

5. Vorrichtung nach Anspruch 4, **dadurch gekennzeichnet, daß** sie mehrere entlang des Trägermittels (2) verteilte Erfassungsmittel (20) umfaßt.

6. Vorrichtung nach Anspruch 4 oder Anspruch 5, **dadurch gekennzeichnet, daß** das Trägermittel (2) aus einem röhrenförmigen Element besteht, dessen freies Ende als eine Spitze (21) ausgestaltet ist.

7. Vorrichtung nach irgendeinem der Ansprüche 4 bis 6, **dadurch gekennzeichnet, daß** das Trägermittel (2) mit Greifmitteln ausgestattet ist, die seine Handhabung und seinen Transport durch einen Bediener erlauben.

8. Vorrichtung nach irgendeinem der Ansprüche 4 bis 6, **dadurch gekennzeichnet, daß** sie mehrere Trägermittel (2) umfaßt, die jeweils mit einem oder mehreren Erfassungsmitteln (20) und mit Mitteln zur Verarbeitung der empfangenen Signale ausgestattet sind, wobei die besagten Verarbeitungsmittel mit einer Steuerzentrale verbunden sind, die geeignet ist, um die durch die besagten Verarbeitungsmittel aufgenommenen Ergebnisse zu analysieren und die besagten Ergebnisse anzuzeigen.

9. Vorrichtung nach irgendeinem der Ansprüche 4 bis 6, **dadurch gekennzeichnet, daß** die verschiedenen Trägermittel (2) physisch verbunden und geeignet sind, um durch einen Bedienungsroboter (50) betätigt zu werden.

10. Vorrichtung nach irgendeinem der vorgehenden Ansprüche 4 bis 9, **dadurch gekennzeichnet, daß** das Mittel für die Verarbeitung der empfangenen Signale Mittel, geeignet, um die Erfassung der von den Sensoren herkommenden Information zu sichern, Mittel, geeignet, um die Verarbeitung der erfaßten Information oder während der Erfassung auszuführen, Mittel zur Steuerung der Benutzerschnittstelle, eine dynamisch rekonfigurierbare Datenbank mit Insektenprofilen, Mittel für die Speicherung der Ergebnisse von den bei einer Messungsaktion durchgeführten Behandlungen, Übertragungsmittel, geeignet, um das Herunterladen der Informationen auf einen äußeren Rechner über alle Datenverarbeitungskommunikationsmittel zu sichern, umfaßt.

## Claims

1. Method for detecting, classifying and densimetrically quantifying granivorous insects, of one or several families of insects simultaneously present, in stocks of cereals or the like, of the type consisting in detecting said insects through the noises and sound and/or infrasonic vibrations which they emit, **characterised in that** it consists in carrying out the following operations:
- recording the actual noises in said stocks,
- eliminating the known random noise,
- detecting on the envelope energy curve obtained possible windows corresponding to energy peaks and determining the average frequency, the spectral width and total energy,
- comparing the average frequency and the width of each of said windows with those of known and indexed windows of similar characteristics, in order to carry out a taxinomic classification,
- finally, comparing the average frequency and the total energy of each of said windows with those of known and indexed windows of similar characteristics, in order to carry out a densimetric quantification.

2. Method according to claim 1, **characterised in that** the following operations are carried out :
- analysing the curve of frequencies and detecting windows of frequency corresponding to frequency peaks, and determining their average frequency and their spectral width,
- comparing the curves of energy and frequency, and eliminating the windows corresponding to non-matching peaks of energy or frequency,
- comparing the windows corresponding to peaks of frequency of the remaining pairs with known and indexed similar values, in order to determine the taxonomy and the stage of development.

3. Method according to claim 1 or claim 2, **characterised in that** temperature and/or hygroscopy measurements are carried out, which are integrated into the signal processing, so as to balance the obtained result.

4. Device allowing implementing the method according to any of the preceding claims, of the type comprising means (20) allowing detecting the sound and/or infrasonic noises emitted by insects in stocks of cereals or the like,
**characterised in that** it comprises
on the one hand, at least rectilinear supporting means (2) capable of being inserted into the stock (L) of cereals, or the like, to a determined depth, said supporting means (2) carrying one or more of said sensor means (20) ;
on the other hand, means for
- recording the actual noises in said stock,
- eliminating the known random noise,
- detecting on the envelope energy curve obtained possible windows corresponding to energy peaks and determining the average frequency, the spectral width and total energy,
- comparing the average frequency and the width of each of said windows with those of known and indexed windows of similar characteristics, in order to carry out a taxinomic classification,
- finally, comparing the average frequency and the total energy of each of said windows with those of known and indexed windows, in order to carry out a densimetric quantification,
and, still on the other hand, means for displaying the results.

5. Device according to claim 4, **characterised in that** it includes several sensor means (20) distributed alongside the supporting means (2).

6. Device according to claim 4 or claim 5, **characterised in that** the supporting means (2) consists of a tabular member the free end of which is in the form of a tip (21).

7. Device according to any of claims 4 to 6, **characterised in that** the supporting means (2) is provided with gripping means authorizing its handling and its transportation by an operator.

8. Device according to any of claims 4 to 6, **characterised in that** it includes several supporting means (2) each equipped with one or several sensor means (20), and means for processing the detected signals, said processing means being connected to a control unit capable of analysing the results recorded by said processing means and of displaying said results.

9. Device according to any of claims 4 to 6, **characterised in that** the various supporting means (2) are physically connected, and are capable of being actuated by a handling robot (50).

10. Device according to any of the preceding claims 4 to 9, **characterised in that** the means for processing the detected signals includes means capable of ensuring the acquisition of data coming from the sensors, means capable of carrying out the processing of the data acquired or being acquired, means for controlling the interface with the user, a dynamically re-configurable insect-profile data bank, means for storing the results of the treatments carried out during a series of measurements, transmission means capable of ensuring the transmission of data to an external calculator through any data-processing communication means.
